(19) Europäisches Patentamt
European Patent Office
Office européen des brevets

(11) **EP 4 539 320 A1**

(12) **EUROPEAN PATENT APPLICATION**

(43) Date of publication:
**16.04.2025 Bulletin 2025/16**

(21) Application number: **24199900.2**

(22) Date of filing: **12.09.2024**

(51) International Patent Classification (IPC):
*H02M 1/32* (2007.01)      *H02M 1/36* (2007.01)
*H02M 3/00* (2006.01)      *H02M 3/335* (2006.01)

(52) Cooperative Patent Classification (CPC):
**H02M 1/325; H02M 1/36; H02M 3/01;**
**H02M 3/33573; H02M 3/33584**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **13.10.2023 GB 202315701**

(71) Applicant: **Rolls-Royce plc**
**London N1 9FX (GB)**

(72) Inventors:
• **Trainer, David**
  **Derby DE24 8BJ (GB)**
• **Sweet, Mark**
  **Derby DE24 8BJ (GB)**
• **Makulec, Cezary**
  **Derby DE24 8BJ (GB)**
• **Briff, Pablo**
  **Derby DE24 8BJ (GB)**
• **Mapperson, John**
  **Derby DE24 8BJ (GB)**

(74) Representative: **Rolls-Royce plc**
**Moor Lane (ML-9)**
**PO Box 31**
**Derby DE24 8BJ (GB)**

(54) **DC:DC CONVERTER CONTROL**

(57)      There is provided an electrical power system 10, 20, 30, comprising: a DC:DC power electronics converter 100, 100a, 100b comprising: a DC:AC converter circuit 110 having a DC side and an AC side; an AC:DC converter circuit 120 having a DC side and an AC side; and an AC link 130 connecting the AC side of the DC:AC circuit and the AC side of the AC:DC converter circuit, the AC link including a transformer 135 having a first winding 135-i connected to the AC side of the DC:AC converter circuit and a second winding 135-ii connected to the AC side of the AC:DC converter; a DC power source connected to the DC side of the DC:AC converter circuit 110; a DC electrical network connected to the DC side of the AC:DC converter circuit 120; and a control system 150 configured to: control a switching operation of a first plurality of transistors 111-L, 111-H, 112-L, 112-H of the DC:AC converter circuit 110 and a second plurality of transistors 121-L, 121-H, 122-L, 122-H of the AC:DC converter circuit 120 monitor one or more operating parameters of the electrical power system and determine, based on the one or more parameters, whether there is a fault in the DC electrical network; and in response to determining there is a fault in the DC electrical network, modify a switching operation of the first plurality of transistors and/or the second plurality of transistors to supply a controlled amount of fault current from the DC power source to the DC electrical network via the
DC:DC power electronics converter.

FIG. 3

**Description**

## TECHNICAL FIELD

This disclosure relates to the control of DC:DC power converters in electrical power systems, particularly in response to faults.

## BACKGROUND

A DC:DC power electronics converter may be used to interface between two DC parts of an electrical power system. For example, an electrical power system may have two DC electrical networks with different operating voltages, and a DC:DC converter may provide an interface between the two networks so that power can be exchanged between them. In another example, an electrical power system may include a DC electrical network that is supplied with power by an energy storage system (e.g., a battery). The terminal voltage of a battery typically decreases with its state of charge, so a DC: DC converter may be provided between the terminals of the energy storage system and the DC electrical network to stabilise the voltage supplied to the DC electrical network as the battery discharges.

In the event of a fault in a DC network connected to one side of a DC:DC converter, a zero or near-zero impedance is presented across the DC terminals facing the fault. This very low impedance may result in a very large current - referred to herein as the fault current - being fed from the healthy side of the converter to fault site. This may be particularly concerning where the healthy side of the converter interfaces with an energy storage system, which may store a very large amount of energy and have low internal resistance, resulting in a particularly high fault current capable of damaging the faulted DC network.

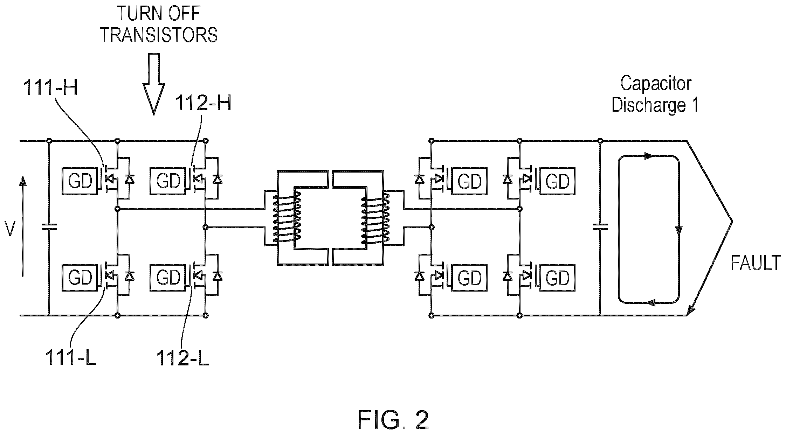

A know response to such a fault is illustrated in FIG. 2 for a DC:DC converter of the Dual Active Bridge (DAB) type. In response to the fault, all of the transistors in the DC:AC circuit 110 are quickly switched off, typically within a few microseconds, extinguishing the fault current before it becomes damagingly high. While this approach does provide a degree of protection, completely extinguishing the current supplied to the faulted DC network may inhibit fault discrimination and isolation. This may mean the entire DC network becomes isolated and non-operational even if only a small part of it has a fault.

## SUMMARY

According to a first aspect, there is an electrical power system, comprising:

a DC:DC power electronics converter comprising a DC:AC converter circuit having a DC and an AC side; an AC:DC converter circuit having a DC side and an AC side; and an AC link connecting the AC side of the DC:AC circuit and the AC side of the AC:DC converter circuit, the AC link including a transformer having a first winding connected to the AC side of the DC:AC converter circuit and a second winding connected to the AC side of the AC:DC converter;
a DC power source connected to the DC side of the DC:AC converter circuit;
a DC electrical network connected to the DC side of the AC: DC converter circuit; and
a control system configured to:

control a switching operation of a first plurality of transistors of the DC:AC converter circuit and a second plurality of transistors of the AC:DC converter circuit;
monitor one or more operating parameters of the electrical power system and determine, based on the one or more parameters, whether there is a fault in the DC electrical network; and
in response to determining there is a fault in the DC electrical network, modify a switching operation of the first plurality of transistors and/or the second plurality of transistors to supply a controlled amount of current from the DC power source to the DC electrical network.

Each of the DC:AC converter circuit and the AC:DC converter circuit can take any suitable form. In an embodiment, each of the DC:AC converter circuit and the AC:DC converter circuit is an H-bridge circuit. In another embodiment, each of the DC:AC converter circuit and the AC:DC converter circuit is a 3-phase, 2-level converter circuit.

In an embodiment, modifying the switching operation of the first and/or second plurality of transistors comprises: modifying the switching operation of the first plurality of transistors so that a waveform of a voltage applied to the first winding of the transformer changes from a square wave to a quasi-square wave. In an embodiment, changing the square wave to a quasi-square wave comprises adding zero-voltage notches or portions between positive and negative voltage portions of the signal.

In an embodiment, modifying the switching operation of the first and/or second plurality of transistors comprises:

modifying the switching operation of the first plurality of transistors so that a duty cycle of a waveform of a voltage applied to the first winding of the transformer changes. In an embodiment, the control system increases the duty cycle of the waveform, by increasing a fraction of each cycle during which the voltage is non-zero.

In an embodiment, modifying the switching operation of the first and/or second plurality of transistors comprises: alternately switching the second plurality of transistors between a fault feeding configuration and a crowbar configuration. In the fault feeding configuration, current is supplied to the DC electrical network through the AC:DC converter circuit. In the crowbar configuration, current is not supplied to the DC electrical network and is contained within the AC:DC converter circuit.

In an embodiment, in the fault-feeding configuration, a low-side transistor of a first half-bridge bridge of the AC:DC converter circuit and a high-side transistor of a second half-bridge of the AC: DC converter circuit are switched on while a high-side transistor of the first half-bridge and a low-side transistor of the second half-bridge are switched off. In the crowbar mode, only low-side transistors or only high-side transistors of the AC:DC converter circuit are switched on.

In an embodiment, the control system is further configured to control a fraction of a time period during which the second plurality of transistors are in the fault-feeding configuration to control the amount of current supplied from the DC power source to the DC electrical network.

In an embodiment, the control system is configured to control the fraction of the time period during which the second plurality of transistors are in the fault-feeding configuration to avoid a sum of an output impedance, $Z_{out}$, of the DC:AC converter circuit and an impedance of the fault, $Z_{fault}$, equalling zero.

In an embodiment, the control system is further configured to:

isolate the fault in the DC network; and
after isolating the fault in the DC network, control the switching operation of the first plurality of transistors and/or the second plurality of transistors to supply a controlled amount of current from the DC power source to the DC electrical network to charge one or more capacitors of the DC electrical network.

In an embodiment, the AC link further comprises a capacitor connected in series between the AC side of the DC:AC converter circuit and the first winding of the transformer.

In an embodiment, the DC:DC converter further comprises a switch arrangement having a first state and a second state, and the control system is further configured to control the state of the switch arrangement. In the first state, the capacitor is connected in series between the AC side of the DC:AC converter circuit and the first winding of the transformer. In the second state, there is a current path between the AC side of the DC:AC converter circuit and the first winding of the transformer that does not include the capacitor.

In an embodiment, the control system is configured to control the state of the switch arrangement based on an operating condition of the DC electrical network. In an embodiment, the control system is configured to change the state of the switch arrangement in response to determining there has been a change in the operating condition of the DC electrical network.

In an embodiment, the switch arrangement is normally in the first state and the control system is configured to switch the switch arrangement into the second state in response to a determination that there is a fault in the DC electrical network. The expression "normally" is used here to refer to operation of the system as intended, without a fault in the DC network. Therefore, the DC:DC converter may normally be operated as a resonant LLC DC:DC converter and, if a fault in the DC network is detected, be reconfigured to operate as, e.g., a DAB DC:DC converter.

In an embodiment, the AC link further comprises a second capacitor connected in series between the AC side of the AC:DC converter circuit and the second winding of the transformer.

In an embodiment, the DC:DC converter further comprises a second switch arrangement having a first state and a second state, and the control system is further configured to control the state of the second switch arrangement. In the first state, the capacitor is connected in series between the AC side of the AC:DC converter circuit and the second winding of the transformer. In the second state, there is a current path between the AC side of the AC:DC converter circuit and the second winding of the transformer that does not include the capacitor.

In an embodiment, the first winding of the transformer has a first number of turns and the second winding of the transformer has a second number of turns different from the first number of turns.

In an embodiment, a turns ratio, defined as the ratio of the first and second numbers of turns, may be equal to a desired ratio of the voltages at the two DC sides of the DC:DC converter. In one specific example, the turns ratio between the first and second windings is about two.

In an embodiment, the DC power source is or comprises an energy storage system. In an embodiment, the DC power source is another DC electrical network. Where the DC power source is a further DC electrical network, the further DC electrical network may interface with an energy storage system.

The control system can take any suitable form. For example, the control system may be a single controller, or multiple distributed controllers. It may be implemented in hardware and/or software.

The electrical power system may be or form part of an aircraft power and propulsion system. The power and propulsion system may be a purely electric power and propulsion system, a hybrid propulsion (*e.g.*, gas turbine and battery/fuel cell hybrid, or battery and fuel cell hybrid system), or a 'more electric' propulsion system having propulsive gas turbine engines that interface with an electrical power system through spool-coupled electrical machines.

According to a second aspect, there is an aircraft comprising the electrical power system of the first aspect.

According to a third aspect, there is a method of operating an electrical power system according to the first aspect. The method comprises: monitoring one or more operating parameters of the electrical power system; determining, based on the one or more operating parameters, whether there is a fault in the DC electrical network; and modifying a switching operation of a first plurality of transistors of the DC:AC converter circuit and/or a second plurality of transistors of the AC:DC converter circuit to supply a controlled amount of current from the DC power source to the DC electrical network.

In an embodiment, modifying the switching operation of the first plurality and/or the second plurality of transistors comprise one or more of:

modifying the switching operation of the first plurality of transistors so that a waveform of a voltage applied to the first winding of the transformer changes from a square wave to a quasi-square wave;

modifying the switching operation of the first plurality of transistors so that a duty cycle of the waveform of the voltage applied to the first winding of the transformer changes;

alternately switching the second plurality of transistors between a fault feeding configuration and a crowbar configuration, wherein, in the fault feeding configuration, current is supplied to the DC electrical network through the AC:DC converter circuit and, in the crowbar configuration, current is not supplied to the DC electrical network and is contained within the AC:DC converter circuit.

In an embodiment, the supply of the controlled amount of current from the DC power source to the DC electrical network may charge one or more capacitors of the DC electrical network. In an embodiment, the one or more capacitors comprises a DC link capacitor of the AC:DC converter circuit.

In an embodiment, the method further comprises: while supplying the controlled amount of current from the DC power source to the DC electrical network via the DC:DC power electronics converter, isolating the fault in the DC electrical network by operating one or more protection devices.

In an embodiment, the method further comprises: after isolating the fault in the DC network and before supplying the controlled amount of current to charge the one or more capacitors, switching off each of the first plurality of transistors to block current flow from the DC power supply to the DC electrical network.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

**FIG. 1A** is a schematic illustration of a DAB DC:DC converter;

**FIG. 1B** is a schematic illustration of a DAB DC:DC converter, further showing possible circuit structures;

**FIG. 1C** illustrates the normal operation of a DAB DC:DC converter;

**FIG. 2** illustrates a way of extinguishing the fault current following a fault in a DC electrical network connected to one side of a DAB DC:DC converter;

**FIG. 3** illustrates how a switching operation of transistors of the DC:AC circuit of the DAB DC:DC converter may be controlled to supply a controlled amount of current to a DC network following a fault;

**FIG. 4** illustrates how a switching operation of transistors of the DC:AC circuit of the DAB DC:DC converter may be controlled to supply a controlled amount of current to a DC network following a fault;

**FIG. 5** illustrates crowbar and fault feeding rectifier configurations of the AC:DC circuit of the DAB DC:DC converter;

**FIG. 6** illustrates exemplary voltage and current waveforms using the crowbar and fault feeding rectifier configurations of FIG. 5;

**FIG. 7A** is an equivalent circuit representation of an electrical power system comprising a DAB DC:DC converter;

**FIG. 7B** is an equivalent circuit representation of an electrical power system comprising a DAB DC:DC converter;

**FIG. 8** illustrates the re-charging of one or more capacitors through the controlled supply of current to a DC network;

**FIG. 9A** is a schematic illustration of a reconfigurable DC:DC converter;

**FIG. 9B** illustrates the frequency-impedance relationships for a resonant LLC DC:DC converter and a DAB DC:DC converter;

**FIG. 9C** is a schematic illustration of a reconfigurable DC:DC converter, further showing possible circuit structures;
**FIG. 10A** is a schematic diagram of an aircraft power and propulsion system that includes DC:DC converters;
**FIG. 10B** is a schematic illustration of an electric aircraft propulsion system;
**FIG. 10C** is a schematic illustration of a hybrid electric aircraft propulsion system;
**FIG. 11A** is a plan view of an aircraft; and
**FIG. 11B** is a perspective view of a vertical take-off and landing (VTOL) aircraft; and
**FIG. 12** is a flow chart of a method of operating an electrical power system.

## DETAILED DESCRIPTION

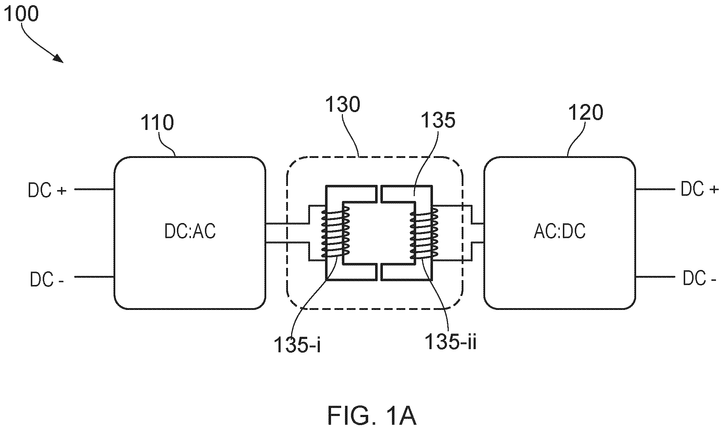

**FIG. 1A** illustrates a Dual Active Bridge (DAB) DC:DC converter 100. The DAB DC:DC converter 100 includes a DC:AC converter circuit 110, an AC:DC converter circuit 120 and an AC link 130. The AC link 130 includes a transformer 135 that has a first winding 135i connected to an AC side of the DC:AC converter circuit 110 and a second winding 135ii connected to an AC side of AC: DC converter circuit 120. The DC side of each of the DC:AC converter circuit 110 and AC:DC converter circuit 120 may be connected to a DC power source and/or sink, for example an energy storage system or DC electrical network.

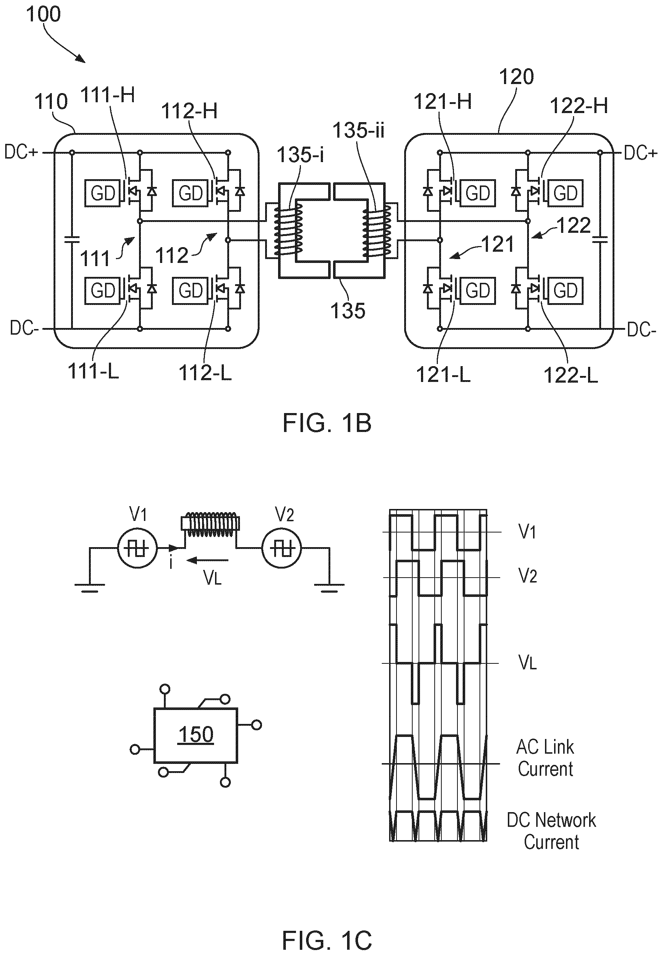

Each of the DC:AC converter circuit 110 and the AC:DC converter circuit 120 can take any form suitable for the desired system functionality, and for this reason no circuit structure is shown in FIG. 1A. An example circuits is, however, shown in **FIG. 1B,** where the DC:AC converter circuit 110 and the AC: DC converter circuit 120 each take the form of an H-bridge circuit. Each H-bridge circuit 110, 120 includes two DC inputs/output/rails, DC+ and DC-, with two half-bridge circuits 111, 112, 121, 122 connected therebetween. Each half-bridge (e.g., half-bridge 111) includes high-side and low-side transistors 111-H, 111-L connected in anti-parallel with a diode, which may be a discrete component or a body diode of the respective transistor. For each H-bridge (e.g., H-bridge 110), the mid-point of the respective half-bridge 111, 112, between the two transistors of the half-bridge, is connected to a respective terminal of a winding 135-i of the transformer 135.

The converter circuits 110, 120 could, however, take other forms, for example:

- Passive circuits (e.g., one of the converter circuits 110, 120 may be a diode rectifier if only unidirectional power flow is required).
- 3-phase, 2-level converter circuits, each having six power semiconductor switches. In this case, a 3-phase transformer may be used in the AC link.
- 3-level neutral point clamped converter circuits.
- T-type converter circuits.
- Modular Multi-level Converter (MMC) circuits.

The normal operation of a DAB DC:DC converter 100 under the control of a control system 150 is illustrated in FIG. 1C. The control system 150 supplies, via gate drive circuits (GD), switching signals to the transistors 111-L, 111-H, 112-L, 112-H, 121-L, 121-H, 122-L, 122-H of the converter circuits 110, 120 so that two 50:50 duty cycle square wave voltages $V_1$, $V_2$ are applied to the transformer 135. By applying a suitable phase shift between the two square waves, an alternating voltage waveform $V_L$ is applied across the leakage reactance of the transformer 135. The voltage waveform $V_L$ has a relatively small volt-time area in both the positive and negative directions to control the current in the AC link and power flow between the two DC sides of the converter 100 (e.g., between two DC networks). The application of a small volt-time area and a high switching frequency (e.g., 20 kHz to 70 kHz) limits the required size and weight of the intermediate transformer 135, which is important for aerospace and other transport applications.

A DAB DC:DC converter 100 has several benefits over some other known types of DC:DC converter (e.g., buck-boost converters), including:

- Galvanic isolation: The intermediate transformer 135 provides a physical electrical break between the two sides of the DC:DC converter (e.g., between two DC electrical networks or between an energy storage system and a DC electrical network). This means high frequency common mode currents created by semiconductor switching, which are capacitively couped to the ground/chassis, are prevented from propagating as the return path is interrupted.

- Grounding: The isolation provides the option to apply different grounding points. For example, an aircraft engine electrical system could operate at +/-270 $V_{DC}$ with respect to ground with the aircraft platform electrical system operating at 0, +270 $V_{DC}$.

- Prevention of Ground Loops: Ground loops can occur in non-isolated power supplies when there are multiple paths for current to flow between the two circuits, which can lead to EMI issues - especially conducted emissions.

- Reduction of capacitive coupling: Capacitive coupling refers to the transfer of energy between the circuits through an electric field. This can occur between input and output circuits if they are in close proximity of a converter. The physical barrier provided by the isolated topology prevents or reduces this phenomenon.

- Prevention of galvanic coupling: Galvanic coupling refers to the transfer of energy between the circuits through a direct electrical connection. This can occur in non-isolated topologies through a shared ground. The physical barrier of the isolated DAB converted topology removes the shared ground which in turn prevents galvanic coupling.

A DAB DC:DC converter 100 also has inherent DC fault blocking capability, illustrated in FIG. 2 for a fault in a DC network connected to the right-hand side of the converter 100. According to this approach, the transistors of the converter circuit 110 facing the non-faulted side are turned off in response to the fault. This extinguishes the fault current that would be supplied from the non-faulted side of the converter 100 to the faulted DC network.

While the approach shown in FIG. 2 is useful in some scenarios, it may have drawbacks in some electrical power systems. For example, a DC electrical network may supply a plurality of electrical loads, and a fault may occur in just one load. Responding to the fault by totally extinguishing the current supplied to the DC network deprives the functioning loads from receiving power. It may also prevent the operation of fault discrimination and isolation systems, for example DC contactors, which may otherwise allow the fault to be identified and isolated so that the remaining parts of system can be returned to operation.

The present disclosure provides ways of supplying a controlled amount of current to a DC electrical network following a fault, e.g., a short circuit fault. In each case, a control system responds to a fault by modifying a switching operation of a first plurality of transistors 111-L, 111-H, 112-L, 112-H of the DC:AC converter circuit 110 and/or a second plurality of transistors 121-L, 121-H, 122-L, 112-H of the AC:DC converter circuit 120.

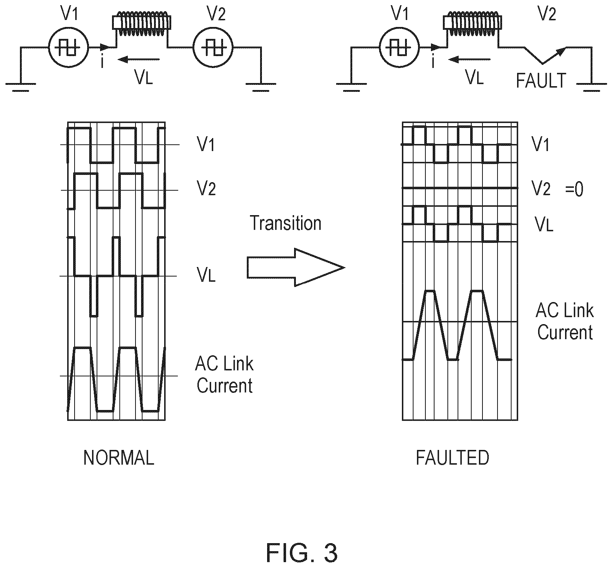

FIG. 3 illustrates a first embodiment. The left-hand side of FIG. 3 shows normal operation of the DAB DC:DC converter 100, described above with reference to FIG. 1C. The right-hand side of FIG. 3 shows the fault response when there is a fault in a DC network connected to one side of the converter 100, which without loss of generality is shown to be the right-hand side in FIG. 3.

When the fault occurs, the voltage $V_2$ collapses to zero or near-zero. The transformer 135 now supports the whole of the alternating voltage $V_1$ produced by the healthy converter circuit 110. If the transistors 121-L, 121-H, 122-L, 122- of the AC:DC converter circuit 120 continue to be switched to produce a 50:50 duty cycle square wave voltage waveform, a fully rectified version of the transformer current is transferred to the faulted network. In other words, the amount of current supplied to the faulted DC network will depend on the AC link current. It is noted that a similar transfer of current can occur if its transistors are turned off, leaving the anti-parallel diodes to conduct instead.

According to the first embodiment, to control the AC link current, the control system 150 responds to the fault by modifying the switching signals supplied to the transistors 111-L, 111-H, 112-L, 112-H so that the voltage $V_1$ applied to the first side of the transformer 135 is a quasi-square wave. Those skilled in the art will appreciate this to mean that the voltage waveform $V_1$ has zero-voltage notches, or portions, between positive and negative voltage portions of waveform, reducing the volt-time area applied to the transformer leakage inductance. In the case of an H-bridge circuit 110, this may be achieved by switching on the two upper transistors or the two lower transistors of the H-bridge 110. By changing the converter switching pattern in this way, the magnitude of the AC link current, and consequently the amount of fault current supplied to the DC network, can be controlled.

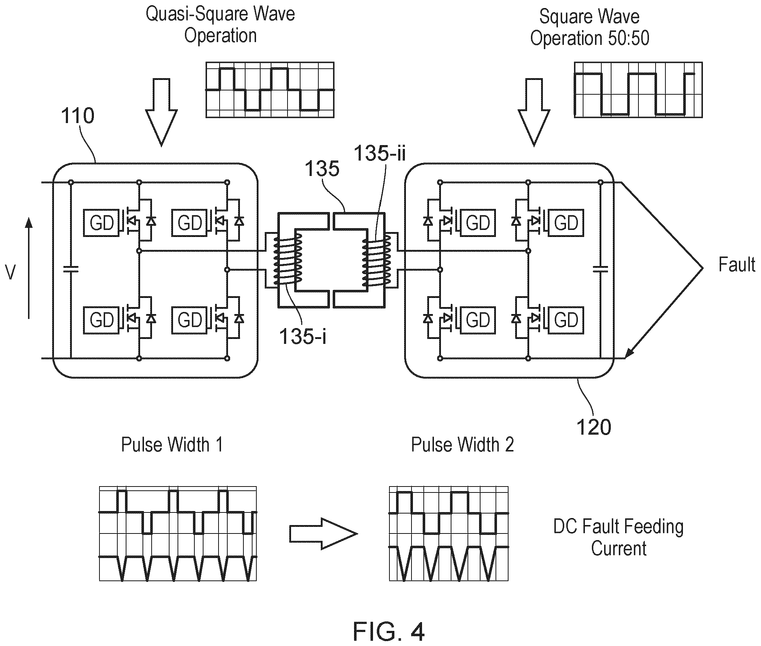

FIG. 4 illustrates a second embodiment. Here, following the fault, the switching operation of the transistors 111-L, 111-H, 112-L, 112-H of the healthy DC:AC converter circuit 110 is modified so that the pulse width of the voltage waveform $V_1$ changes. As before, this modifies the AC link current and therefore the amount of fault current supplied to the faulted DC network. Therefore, by controlling the pulse width of the voltage $V_1$ applied by the healthy DC:AC converter circuit 110, the amount of fault current is controlled.

It can be seen from FIG. 4 that the first and second embodiments can be used in combination. Specifically, the voltage waveforms at the bottom of FIG. 4 can be seen to have a quasi-square form. Thus, the AC link current can be controlled by changing $V_1$ from square form to quasi-square form, by changing the pulse width or by changing both.

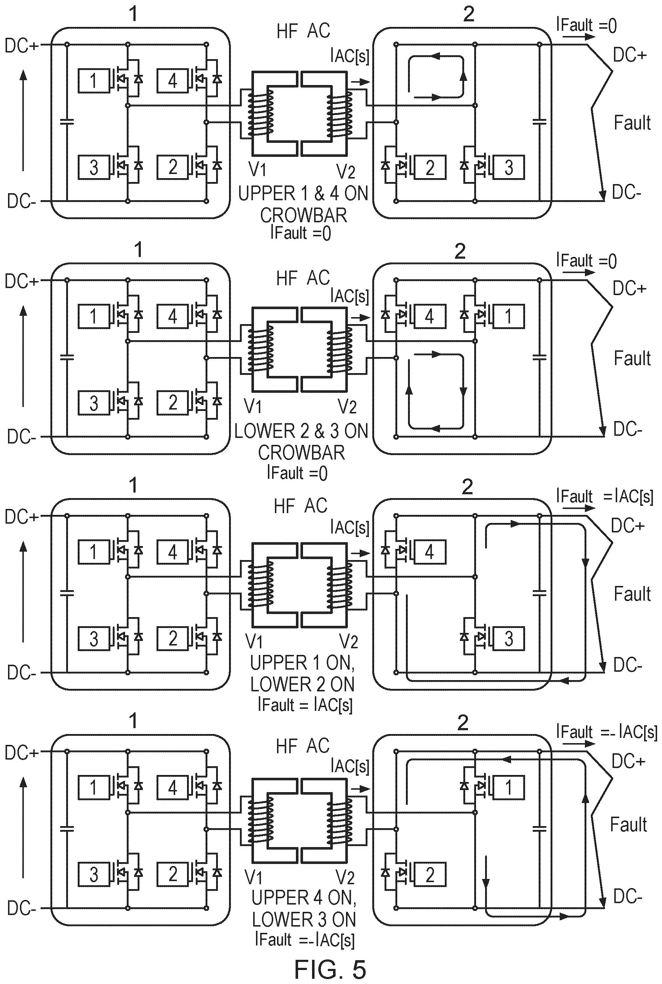

FIG. 5 illustrates a third embodiment in which the switching operation of the transistors of the converter circuit 120 facing the faulted network is modified in response to the fault.

In the third embodiment, the control system 150 responds to the fault by alternately switching the converter circuit facing the fault, i.e., the AC:DC converter circuit 120, between a fault-feeding configuration and a crowbar configuration. In the fault-feeding configuration, the AC: DC converter circuit 120 rectifies the AC link current and transfers it to the faulted DC network. In the crowbar configuration, current from the AC link is contained within (e.g., circulates within) the DC:AC converter circuit 120 so that no current is fed to the faulted DC network. Consequently, the time-averaged amount of current supplied to the faulted DC network is controlled, with the amount depending on the fraction of time spent in the crowbar configuration.

FIG. 5 illustrates the transistor switching pattern for the fault-feeding configuration (left hand side) and the crowbar configuration (right hand side) for the case where the converter circuit 120 is an H-bridge circuit. FIG. 5 shows that, for each of the fault-feeding configuration and crowbar configuration, there are two possible transistor switching patterns; either or both of which may be utilized. In each fault-feeding configuration, a high-side transistor of a first one of half-bridges and a low-side transistor of a second of the half-bridges are switched on, while a low-side transistor of the first one of the half-bridges and a high-side transistor of the second of the half-bridges are switched off. In each crowbar configuration, either only high-side transistors are switched on (i.e., low-side transistors are switched off) or only low-side transistors are switched on.

While a DAB DC:DC converter 100 with H-bridge circuits is illustrated other converter circuits (e.g., two-level, three-phase circuits) could be used instead. For example, in the case of a two-level, three-phase converter, the fault-feeding configuration would have either two high-side and one low-side transistor switched on or one high-side and two low-side transistors switched on. The crowbar configuration would have only high-side or only low-side transistors switched on.

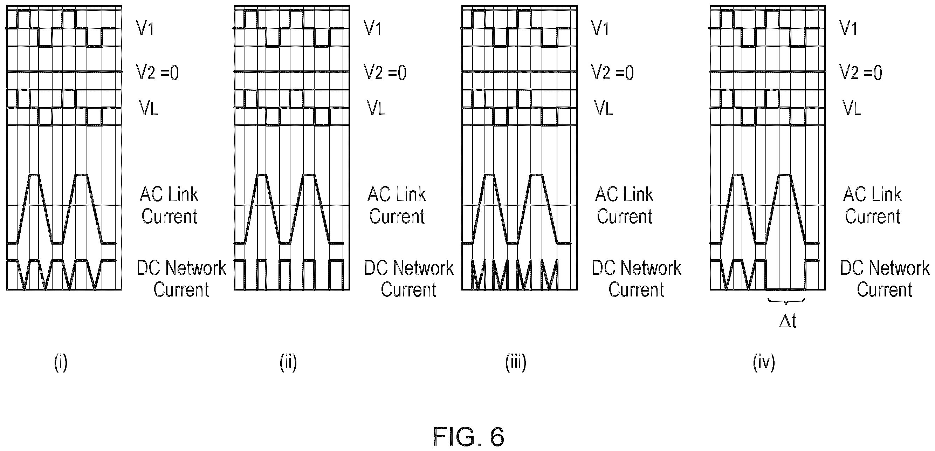

FIG. 6 illustrates the effect of using the crowbar configuration to control the fault current supplied to the DC network. In each of the four illustrated examples, the same quasi-square voltage $V_1$ is applied at the healthy side of the converter 100, resulting in the same AC link current. However, different patterns of alternate switching between the fault-feeding configuration and the crowbar configuration of the converter circuit 120 are utilized. In example (i), only the fault-feeding configuration is used (i.e., there is no use of the crowbar configuration). The DC network current is therefore the same as that illustrated in FIG. 4. In example (ii), the crowbar configuration is used during times where the DC network current would be ramping, resulting in a DC network current with a square waveform. In example (iii), the crowbar configuration is used during times where the DC network current is flat, resulting in a jagged waveform with zero-current portions. In example (iv), the crowbar configuration is used during a time period $\Delta t$, resulting in the same waveform as the first example but with zero current during the time period $\Delta t$. In each of the four examples, the current fed to the faulted DC network contains high frequency alternating components. To mitigate, the fault response may further involve applying a suitable low pass filter to remove the high frequency components.

The third embodiment may be used in isolation or in combination with the first and/or second embodiment. In other words, the AC link current may not be controlled, with all control of the DC network fault current being provided by alternate switching of the AC:DC converter circuit 120 between the fault-feeding and crowbar configuration. Alternatively, however, further control of the DC network current may be provided by also modifying the switching operation of the transistors of the DC:AC converter circuit 110 to change the AC link current, in accordance with the first and second embodiments.

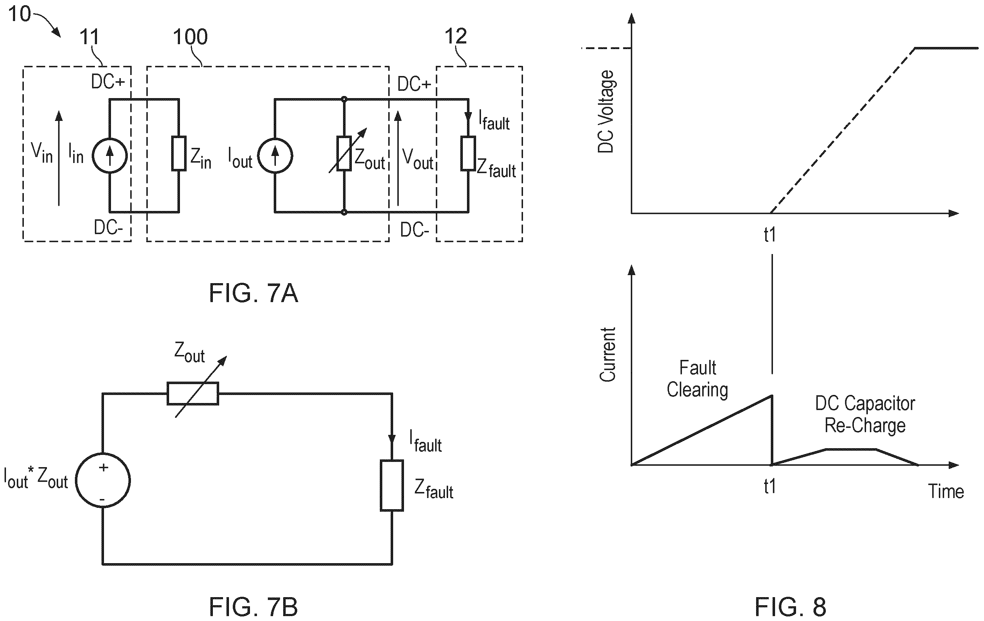

The alternate switching between the fault-feeding and crowbar configurations to control the amount of fault current supplied to the DC network may also be approached from an equivalent circuit perspective. To this end, FIG. 7A is an equivalent circuit representation of an electrical power system 10 including the DAB DC: DC converter 100. At the left-hand side, the DC: DC converter 100 is connected to a DC power source 11 and at the right-hand side the DC:DC converter 100 is connected to a DC electrical network 12 which, in this example, is subject to a fault.

The system 10 can be represented as an input stage with input current $I_{in}$ and input impedance $Z_{in}$, output current $I_{out}$ and variable impedance $Z_{out}$. $Z_{out}$ is the impedance presented by the DC:DC converter 100 to the DC electrical network 12. $I_{in}$ and $I_{out}$ are regulated via the input and output impedances for a given input and output voltage $V_{in}$ and $V_{out}$. The input and output impedances $Zi_n$ and $Z_{out}$ are controlled by varying the switching pattern of the transistors in the converter 100.

In steady-state, fault-free conditions, $Z_{out}$ tends to be large, with a value depending on the droop defined by the output power (or alternatively output current) versus output voltage characteristic of the DC-DC converter 100. When a fault occurs, $Z_{out}$ is regulated to a low value approaching the fault impedance $Z_{fault}$ to limit the fault contribution of the converter 100 into the fault site. The regulation between zero (short-circuit) and infinity (open circuit) defines the amount of current presented to the DC network 12.

By using the Norton and Thevenin analogy, the output stage of the converter can be represented by the circuit shown in FIG. 7B. The fault current is given by:

$$I_{fault} = \frac{I_{out} * Z_{out}}{Z_{out} + Z_{fault}}$$

**(Equation 1)**

The fault current becomes unstable when the series impedance value $Z_{out} + Z_{fault}$ resonates to produce a near-zero impedance value (i.e., when the denominator of Equation 1 approaches zero). This instability can be avoided by controlling the transistor switching pattern to provide a minimum positive damping (positive resistive part of $Z_{out}$) to limit the fault current. This is an example of a Nyquist Stability Criterion, where a resonance induced by two series impedances that can lead to uncontrolled currents or unwanted sustained oscillations is avoided.

In practice, the instability can be avoided and the fault current, $I_{fault}$, limited to a desired amount by controlling the amount of time the AC:DC converter circuit 120 spends in the crowbar configuration. This can be understood from the following equation:

$$Z_{out\_avg} = d * Z_{min} + (1 - d) * Z_{max}$$

(Equation 2)

In Equation 2, "d", which may be referred to as the control duty cycle, represents the fraction of a time period, T, during which the AC: DC converter circuit 120 is in the fault-feeding configuration. $Z_{min}$ is the output impedance in the fault-feeding configuration and has a value close to zero. $Z_{max}$ is the output impedance in the crowbar configuration and has some higher value. $Z_{out\_avg}$ is then the average output impedance over the time period, T. From Equations 1 and 2, it can be seen that the fault current $I_{Fault}$ is controlled by selecting the value of "d". The value should be selected so that:

(i) Equation 1 gives the desired value of $I_{fault}$; and

(ii) $Z_{out\_avg}$ is large enough (i.e., d is small enough) so that the instability is avoided at all frequencies.

As discussed above, the ability to supply a controlled amount of fault current to a faulted DC network may advantageously allow a fault to be identified and isolated. For example, the controlled current may be used to activate a switch (e.g., a DC contactor or SSCB) to isolate the faulted part of the network. In accordance with another aspect of the present disclosure, the described fault current control techniques may also be used after a fault has been isolated.

A consequence of a fault in a DC network is that the network voltage collapses to zero or near-zero. This typically causes capacitors in the faulted network to discharge. For example, referring briefly to FIG. 1B, the DC link capacitor 125 will typically discharge if the voltage across it collapses. Once the fault is isolated, the network voltage will begin to rise. In response to this rise or another indication that the fault is isolated, the control system 150 may initially block the flow of current to the previously faulted network, by turning off the healthy-side transistors 111-L, 111-H, 112-L, 112-H as shown in FIG. 2. After blocking the current, the above-described fault current control techniques may be used to inject a low amount of current into the affected DC network to re-charge the DC link capacitor 125 and possibly also other capacitors in the DC network. By doing so, it may be possible to quickly restart the electrical power system without necessarily employing soft-start circuits comprising contactors and resistors.

The process is illustrated in FIG. 8. At time zero, the fault in the DC network occurs and the network voltage collapses to near-zero (see top graph). Upon detection of the fault, the fault current is blocked by adopting the configuration shown in FIG. 2 meaning the network current drops to zero (see bottom graph). Following this, between time zero and time t1, the techniques described above with reference to FIGS 3 to 7B are used to supply a controlled fault current to identify and clear the fault. At time t1, the fault is cleared, and the network voltage begins to increase (see top graph). In response, the current is initially blocked by adopting the configuration shown in FIG. 2. After this, the techniques described above with reference to FIGS. 3 to 7B are used to supply a controlled amount of current to recharge capacitors in the affected network. Once the capacitors are charged and the network voltage has reached its target value, normal operation of the electrical power system resumes.

The use of the above-described current control techniques to pre-charge the capacitors may provide further advantages, including the optional omission of pre-insertion resistors (PIRs) in some or all of the power system. PIRs are conventionally fitted to converters to protect the capacitors and converter diodes against high inrush currents at converter start-up, which can degrade the capacitors and semiconductors and limit their lifetime. However, by controlling the current as described herein, the inrush current can be controlled and the PIRs omitted. In particular, the converter 100 may be operated using a lower-than-normal frequency signal, generated by using pulse-width modulation (PWM) of the transistors at one side of the DC:DC converter 100. At the side of the converter where the capacitors are being charged, synchronous rectification is performed to provide a smooth current waveform, charging the capacitors with minimal voltage ripple and extending their lifetime. The use of a lower-than-normal frequency in a DAB DC:DC converter would ordinarily necessitate a transformer with a larger cross-section, however by only using this mode to transfer low powers (as is the case with capacitor charging) a relatively small core can be maintained without reaching transformer saturation.

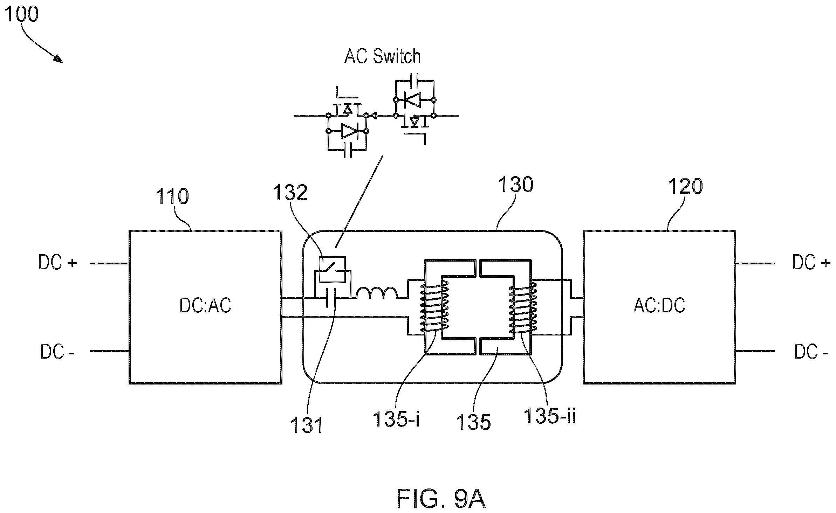

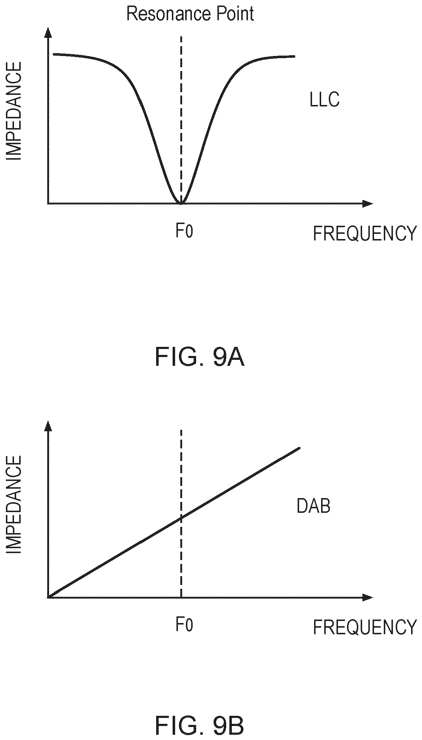

FIG. 9A illustrates an alternative type of DC:DC converter 100 which may be used in accordance with the present disclosure. Like the DC:DC converter described above with reference to FIG. 1A, the converter 100 of FIG. 9A includes a DC:AC converter circuit 110, an AC:DC converter circuit 120, and an AC link 130 that includes a transformer 135 with first and second windings 135-i, 135-ii. Additionally, however, the AC link 130 includes a capacitor 131 connected in series between the AC side of the DC:AC converter circuit 110 and the first winding 135-i of the transformer.

The AC link 130 of the DC:DC converter 100 of FIG. 9A has series-connected capacitance (provided by the capacitor 131) and inductance (provided by the transformer 135 and indicated by the inductor circuit symbol). As a result, the converter 100 behaves as a so-called resonant LLC converter, with an impedance that has a minimum value at a

resonant frequency, $F_0$, but rises steeply away from $F_0$. This is depicted in the left-hand graph of FIG. 9B. The value of the resonant frequency is given by:

$$F_0 = \frac{1}{2\pi\sqrt{L_r C_r}}$$

**(Equation 3)**

In Equation 3, $C_r$ is the capacitance of the capacitor 131 and $L_r$ is the inductance of the transformer 135. $L_r$ includes both the series contribution ("leakage inductance") and the parallel contribution ("magnetizing inductance") of the transformer 135, with the leakage inductance usually dominating the value of $L_r$.

The right-hand graph of FIG. 9B shows how the impedance of the DAB DC:DC converter 100 of FIG. 1A varies with frequency. The relationship is linear, and by comparing the two graphs of FIG. 9B it can be seen the impedance of the resonant LLC converter is much lower at the frequency $F_0$ but that the impedance rises steeply away from $F_0$. Thus, compared with the DAB DC:DC converter, the resonant LLC converter passes the fundamental frequency with very little impedance but blocks harmonics due its high impedance away from $F_0$. The resonant LLC converter therefore has a very high efficiency when operated at or close to $F_0$ and may be a preferred topology where stable operation is possible, for example where the voltage ratio between the two sides of the converter 100 is fixed and can be accommodated by the turns ratio of the transformer 135. This may be the case if, for example, the DC:DC converter 100 interfaces between two DC networks having different but fixed operating voltages.

One potential drawback of the resonant LLC converter topology is that it may be difficult to effectively implement the fault current control techniques described above. This is because the steep and non-linear rise in impedance away from $F_0$ limits the control bandwidth of the resonant LLC converter. To overcome this drawback, the converter 100 shown in FIG. 9A includes a switch arrangement 132 which has first and second switch states. In the first state of the switch arrangement 132, the capacitor 131 is connected in series between the AC side of the DC:AC converter circuit 110 and the first winding 135-i of the transformer. In the second state of the switch arrangement 132, there is a bypass path around the capacitor 131 so that the AC side of the DC:AC converter circuit 110 is connected directly to the first winding 135-i of the transformer 135. In the second switch state of the switch arrangement 132, the AC link 130 is purely inductive and therefore has the linear frequency-impedance behavior shown in the right-hand graph of FIG. 9B. During normal, fault-free operation, the DC:DC converter 100 may be operated as a resonant LLC converter. In response to a fault, however, the switch arrangement 132 may be switched to the second state so that the fault current control techniques described above may be effectively utilized.

In the depicted example, the switch arrangement 132 takes the form an AC switch connected in parallel with the capacitor 131. The AC switch 132 may be a mechanical AC switch, for example an AC contactor. Alternatively, a semiconductor switch, for example a pair of reverse-series transistors may be used. Switches and switch arrangements of types other than a parallel-connected switch are contemplated and will occur to persons skilled in the art.

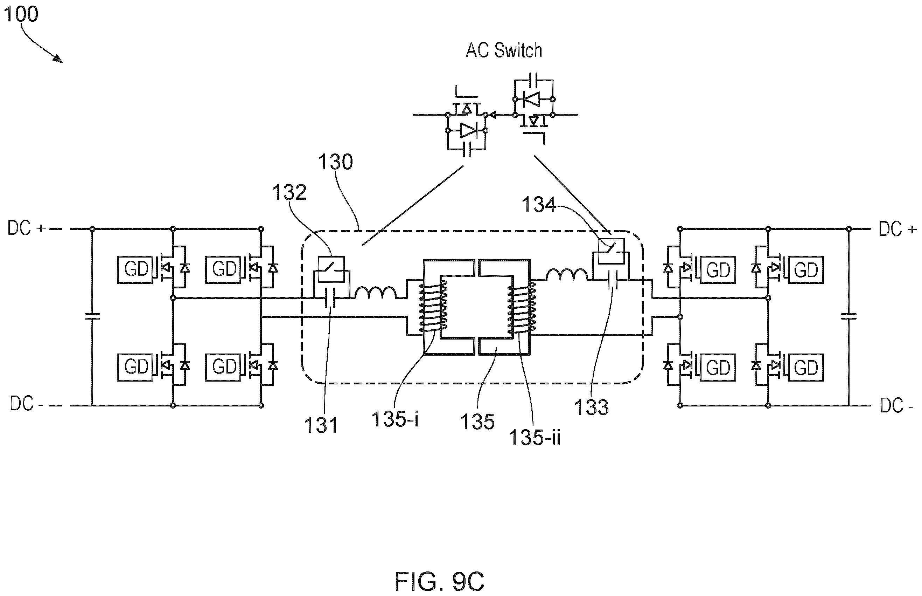

**FIG. 9C** illustrates a further example in which there is a further capacitor 133 and switch arrangement 134 connected between the AC side of the AC:DC converter circuit 120 and the second transformer winding 135-ii. Consequently, both sides of the AC link 130 include capacitance and the converter 100 has full bi-directional capability. FIG. 9C also shows the circuit structure of the converter circuits 110, 120. As before, although an H-bridge circuit structure is shown, other converter circuits could be used instead.

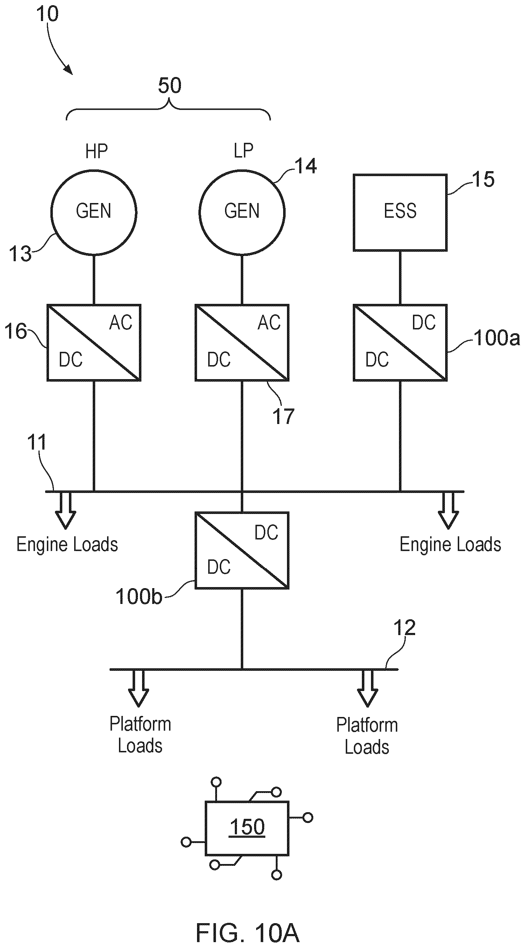

As explained above, the present disclosure may be implemented in an aircraft electrical power system. Exemplary power and propulsion systems are shown in FIGS. 10A-10C.

**FIG. 10A** illustrates an electrical power system 10 of an aircraft. The electrical power system 10 includes two DC networks: a first, higher voltage (e.g., 540 $V_{dc}$), DC network 11 that supplies power to electrical loads associated with a gas turbine engine 50 and a second, lower voltage (e.g., 270 $V_{dc}$), DC network 12 that supplies platform electrical loads. The first DC network 11 is supplied with power, via rectifiers 16, 17, from first and second electrical generators 13, 14 that are coupled to the high-pressure (HP) and low-pressure (LP) spools of the gas turbine engine 50. The first DC network is also supplied with power by an energy storage system, ESS, 15, and a first DC:DC power converter 100a is connected between the terminals of the ESS 15 and the first DC network 11 to account for variation in the terminal voltage of the ESS 15 as it charges and discharges. A second DC:DC power converter 100b is connected between the first and second DC networks 11, 12 for power exchange therebetween. Depending on the configuration of the DC:DC converters 100a, 100b, power flow may unidirectional or bi-directional. The system further includes a control system 150, as described previously.

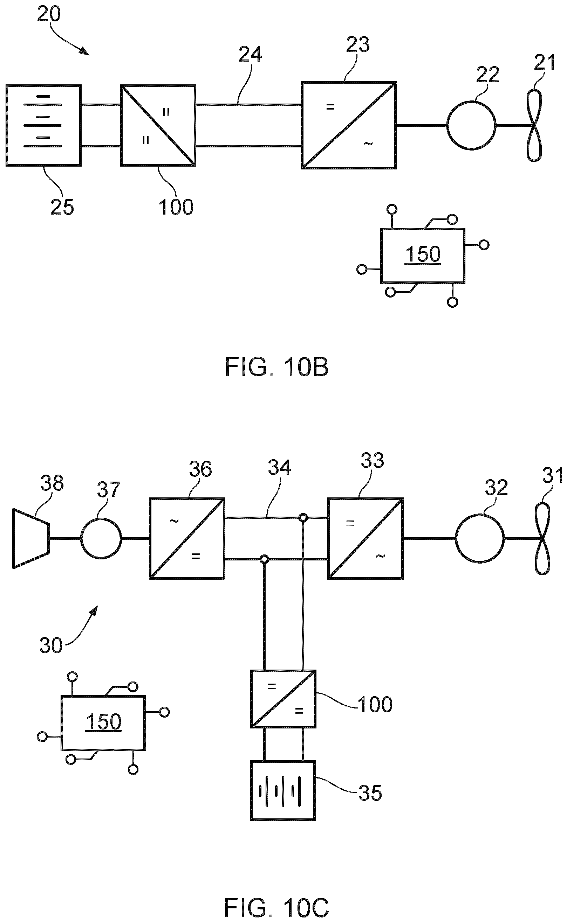

**FIG. 10B** shows, in schematic form, a purely electrical power and propulsion system 20 of an aircraft. The system 20 includes a propulsor 21 (e.g., a propeller or fan), whose rotation is driven by an electrical machine 22. The electrical machine 22 receives electrical power from a DC network 24 via a DC:AC power converter 23. The DC network 24 is supplied with power by an energy storage system 25. A DC:DC converter 100 provides an interface between the energy storage system 25 and the DC network 24. Control of the system is performed by the control system 150.

**FIG. 10C** shows, again in schematic form, a hybrid electrical power and propulsion system 30 of an aircraft. The system 30 includes a propulsor 31 whose rotation is driven by an electrical machine 32. The electrical machine 32 receives electrical power from a DC network 34 via a DC:AC power converter 33. The DC network 34 is supplied with power by two sources: an energy storage system 35 and a generator set including a gas turbine engine 38, an electrical generator 37 coupled to a shaft of the gas turbine engine 37 and a rectifier 36. A DC:DC converter 100 provides an interface between the energy storage system 35 and the DC network 34. The DC:DC converter 100 may be bi-directional to facilitate charging of the energy storage system 35 using power from the generator set, in addition to discharge of the battery to the DC network 34. Control of the system is performed by the control system 150. Those skilled in the art will recognise the propulsion system 30 of FIG. 10C to be of the series hybrid type. Other hybrid electric propulsion systems are of the parallel type, while still others are of the turboelectric type or have features of more than one type.

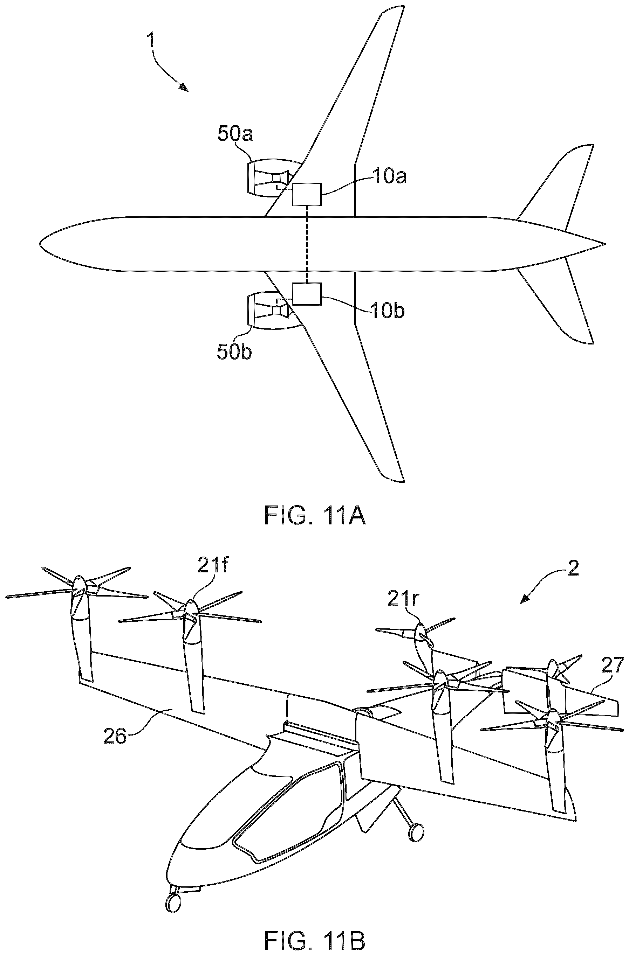

**FIG. 11A** shows an aircraft 1 that includes first and second gas turbine engines 50a, 50b. The engines 50a, 50b are associated with electrical power systems 10a, 10b, which may of the type shown in FIG. 10A or a variant thereof. As illustrated by the dotted lines, the electrical power systems 10a, 10b may be connected. For example, each electrical power system 10a, 10b may have a platform DC electrical network 12 and these may be connected or connectable via bus ties. The gas turbine engines may be of any suitable configuration, for example they may be two-spool, three-spool or geared turbofans having one, two or more shaft-coupled electrical machines 13, 14.

**FIG. 11B** shows a vertical take-off and landing (VTOL) aircraft. The VTOL aircraft has an electric or hybrid electric power and propulsion system, for example of the types shown in FIGS. 10B and 10C. In this exemplary configuration, the VTOL aircraft has front propulsors 21f coupled to a front flight surface and rear propulsors 21r coupled to a rear flight surface. The flight surfaces 26, 27 are capable of tilting between a lift configuration (shown) and a forward flight configuration in which the propulsors 21f, 21r face forward. In other examples, the propulsors 21f, 21r may instead tilt relative to fixed flight surfaces 26, 27.

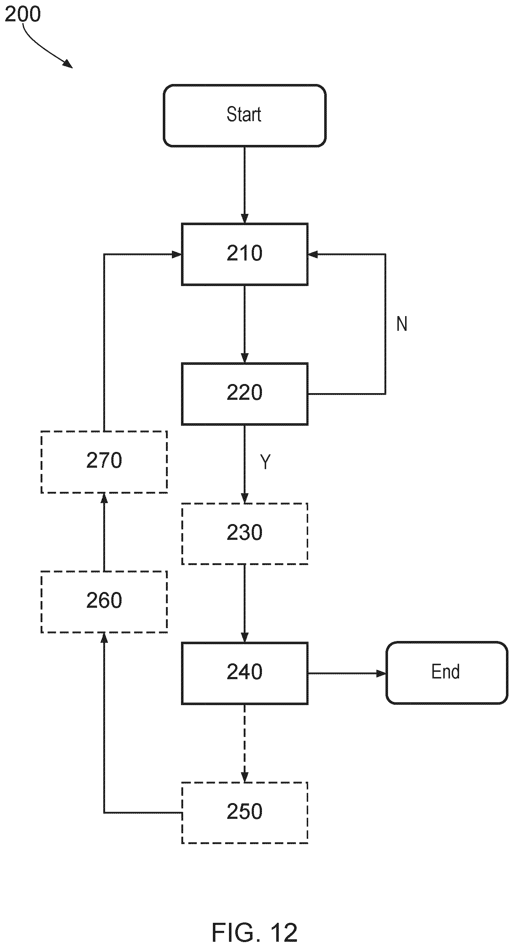

**FIG. 12** is a flow chart illustrating a method 200 of operating an electrical power system that comprises a DC:DC converter 100. The electrical power system may be an aircraft electrical power system, for example one of the types shown in FIGS. 10A-10C. Alternatively, it may be an electrical power system for another transport application (e.g., a vehicle, ship or train) or of a non-transport application. The DC:DC converter 100 is connected, at one side, to a DC power source, for example an energy storage system (e.g., ESS 15) or a DC electrical network (e.g., DC network 11). Another DC side of the DC:DC converter 100 is connected to a DC electrical network (e.g., DC network 12). The method 200 may take place under the control of a control system 150, which may take any desired form suitable for the application, e.g., a distributed control system or a single controller.

At the start of the method 200, the electrical power system 200 is operating in a normal condition. In other words, it is functioning as intended with no faults.

At 210, the control system 150 monitors one or more operating parameters of the electrical power system. For example, the control system 150 may monitor the voltage across the DC link capacitor 125 that faces the DC electrical network, or it may monitor one or more other voltages or currents in the DC electrical network.

At 220, the control system 150 determines, based on the monitored operating parameter(s), whether there is a fault in the DC electrical network. For example, the control system may monitor the voltage across the DC link capacitor 125 and make the determination based on whether there is a change in the voltage. Other examples will occur to those skilled in the art. If no fault is detected, the method 200 returns to 210 and the control system 150 continues to monitor the electrical power system. If a fault is detected (e.g., if the monitored voltage drops), the method proceeds to 230.

At optional step 230, the control system 150 responds to the fault by turning off a first plurality of transistors 111-L, 111-H, 112-L, 112-H of the DC:AC converter circuit 110 to block all current from being supplied from the healthy side of the system to the fault site. By doing so, the risk of the fault site being subject to a very high and harmful current spike may be reduced. Alternatively, the method 200 may proceed directly to step 240.

At 240, the control system 150 modifies a switching operation of the first plurality of transistors of the DC:AC converter circuit 110 and/or a second plurality of transistors of the AC:DC converter circuit to supply a controlled amount of current from the DC power source to the DC electrical network. The control system 150 may implement any one of the first, second or third embodiment described above, or any combination thereof. For example, the control system 150 may:

- Modify the switching operation of the first plurality of transistors 111-L, 111-H, 112-L, 112-H so that a waveform of a voltage applied to the first winding 135-i of the transformer 135 changes from a square wave to a quasi-square wave. The control system 150 may control the AC link current, and thereby the amount of current supplied to faulted network, by adjusting the duration of zero-voltage portions in each cycle.

- Modify the switching operation of the first plurality of transistors so that a duty cycle of the waveform of the voltage applied to the first winding of the transformer changes (e.g., increase). The control system 150 may control the AC link current, and thereby the amount of current supplied to faulted network, by adjusting the duty cycle.

- Alternately switch the second plurality of transistors between a fault feeding configuration and a crowbar configuration. In the fault feeding configuration, current is supplied to the DC electrical network through the AC:DC converter circuit. In the crowbar configuration, current is not supplied to the DC electrical network and is contained within the AC:DC converter circuit. The control system may control the amount of DC current transferred from the AC link to the DC network by controlling a fraction of the total time the converter 100 spends in the crowbar configuration.

In some examples, the method 200 may end at step 240. For example, the control system 150 may continue to supply the controlled amount of current to the DC network so that one or more loads can continue to operate. As another example, the control system 150 may determine that the fault in the DC network cannot be isolated and may therefore isolate the entire DC network from the DC:DC converter 100 and possibly utilize a redundant system if one is available.

In other examples, the method 200 proceeds to 250. At optional step 250, while supplying the controlled amount of current to the DC network, the control system operates one or more protection devices to isolate a fault in the DC network. For example, the control system 150 may operate one or more switch devices (e.g., a mechanical DC contactor, hybrid relay or Solid-State Circuit Breaker) to isolate the fault. It may not be possible to operate such protection devices at zero network current and risky to operate them at full fault current (e.g., due to contactor arcing), however in accordance with the present disclosure such devices can be operated at a controlled current level.

Having isolated the fault, the method may proceed to optional step 260. Here, in response to isolating the fault and/or determining that the fault has been cleared (e.g., due to a measured increase in the network voltage), the control system 150 turns off a first plurality of transistors 111-L, 111-H, 112-L, 112-H of the DC:AC converter circuit 110 to block all current from being supplied from the cleared DC network. In some examples, step 260 may be omitted and proceed straight to step 270, for example where an already low or zero current was being supplied to the DC network.

At 270, the control system 150 prepares the electrical power system for a restart by recharging one or more capacitors (e.g., DC link capacitor 125) that has discharged a consequence of the fault. To do so, the control system 150 implements any one of the first, second or third embodiment described above, or any combination thereof, to supply a controlled, low current to the DC network to charge the capacitor(s).

Having charged the capacitor(s), the electrical power system restarts and begins normal operation. The method 200 therefore proceeds back to 210 where the control system 150 monitors and provides normal control of the system.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

It will also be appreciated that while the invention has been described with reference to aircraft and aircraft propulsion systems, the techniques described herein could be used for many other applications. These include, but are not limited to, automotive, marine and land-based applications.

**Claims**

1. An electrical power system (10, 20, 30), comprising:

   a DC:DC power electronics converter (100, 100a, 100b) comprising a DC:AC converter circuit (110) having a DC and an AC side; an AC:DC converter circuit (120) having a DC side and an AC side; and an AC link (130) connecting the AC side of the DC:AC circuit and the AC side of the AC:DC converter circuit, the AC link including a transformer (135) having a first winding (135-i) connected to the AC side of the DC:AC converter circuit and a second winding (135-ii) connected to the AC side of the AC:DC converter;
   a DC power source connected to the DC side of the DC:AC converter circuit;
   a DC electrical network connected to the DC side of the AC:DC converter circuit; and
   a control system (150) configured to:

   control a switching operation of a first plurality of transistors (111-L, 111-H, 112-L, 112-H) of the DC:AC converter circuit and a second plurality of transistors (121-L, 121-H, 122-L, 122-H) of the AC:DC converter circuit;
   monitor one or more operating parameters of the electrical power system and determine, based on the one or more parameters, whether there is a fault in the DC electrical network; and
   in response to determining there is a fault in the DC electrical network, modify a switching operation of the first plurality of transistors and/or the second plurality of transistors to supply a controlled amount of current from the DC power source to the DC electrical network.

2. The electrical power system (10, 20, 30) of claim 1, wherein modifying the switching operation of the first plurality of transistors (111-L, 111-H, 112-L, 112-H) and/or the second plurality of transistors (121-L, 121-H, 122-L, 122-H) comprises:

modifying the switching operation of the first plurality of transistors so that a waveform of a voltage applied to the first winding (135-i) of the transformer (135) changes from a square wave to a quasi-square wave.

3. The electrical power system (10, 20, 30) of claim 1 or claim 2, wherein modifying the switching operation of the first plurality of transistors (111-L, 111-H, 112-L, 112-H) and/or the second plurality of transistors (121-L, 121-H, 122-L, 122-H) comprises:

modifying the switching operation of the first plurality of transistors so that a duty cycle of a waveform of a voltage applied to the first winding (135-i) of the transformer (135) changes.

4. The electrical power system (10, 20, 30) of any one of the preceding claims, wherein modifying the switching operation of the first plurality of transistors (111-L, 111-H, 112-L, 112-H) and/or the second plurality of transistors (121-L, 121-H, 122-L, 122-H) comprises:

alternately switching the second plurality of transistors between a fault feeding configuration and a crowbar configuration, wherein:

in the fault feeding configuration, current is supplied to the DC electrical network through the AC:DC converter circuit (120); and
in the crowbar configuration, current is not supplied to the DC electrical network and is contained within the AC:DC converter circuit.

5. The electrical power system (10, 20, 30) of claim 4, wherein the control system (150) is further configured to control a fraction of a time period during which the second plurality of transistors (121-L, 121-H, 122-L, 122-H) are in the fault-feeding configuration to control the amount of current supplied from the DC power source to the DC electrical network.

6. The electrical power system (10, 20, 30) of claim 5, wherein the control system (150) is configured to control the fraction of the time period during which the second plurality of transistors (121-L, 121-H, 122-L, 122-H) are in the fault-feeding configuration to avoid a sum of an output impedance, $Z_{out}$, of the DC:AC converter circuit (120) and an impedance of the fault, $Z_{fault}$, equalling zero.

7. The electrical power system (10, 20, 30) of any one of the preceding claims, wherein the control system (150) is further configured to:

isolate the fault in the DC network; and
after isolating the fault in the DC network, control the switching operation of the first plurality of transistors (111-L, 111-H, 112-L, 112-H) and/or the second plurality of transistors (121-L, 121-H, 122-L, 122-H) to supply a controlled amount of current from the DC power source to the DC electrical network to charge one or more capacitors of the DC electrical network.

8. The electrical power system (10, 20, 30) of any one of the preceding claims, wherein the AC link (130) of the DC:DC converter (100, 100a, 100b) further comprises a capacitor (131) connected in series between the AC side of the DC:AC converter circuit (110) and the first winding (135-i) of the transformer (135).

9. The electrical power system (10, 20, 30) of claim 8, further comprising a switch arrangement (132) having a first state and a second state, wherein:

in the first state, the capacitor (131) is connected in series between the AC side of the DC:AC converter circuit (110) and the first winding (135-i) of the transformer (135);
in the second state, there is a current path between the AC side of the DC:AC converter circuit and the first winding of the transformer that does not include the capacitor; and
the control system (150) is further configured to control the state of the switch arrangement.

10. The electrical power system (10, 20, 30) of claim 9, wherein the switch arrangement (132) is normally in the first state and the control system (150) is configured to switch the switch arrangement from the first state to the second state in response to determining there is a fault in the DC electrical network.

11. An aircraft (1, 2) comprising the electrical power system (10, 20, 30) of any one of claims 1 to 10.

12. A method (200) of operating an electrical power system (10, 20, 30) according to any one claims 1 to 10, the method comprising:

monitoring (210) one or more operating parameters of the electrical power system;
determining (220), based on the one or more operating parameters, whether there is a fault in the DC electrical network; and
modifying (240) a switching operation of the first plurality of transistors (111-L, 111-H, 112-L, 112-H) of the DC:AC converter circuit (110) and/or the second plurality of transistors (121-L, 121-H, 122-L, 122-H) of the AC: DC converter circuit (120) to supply a controlled amount of current from the DC power source to the DC electrical network.

13. The method (200) of claim 12, wherein modifying (240) the switching operation of the first plurality of transistors (111-L, 111-H, 112-L, 112-H) and/or the second plurality of transistors (121-L, 121-H, 122-L, 122-H) comprises one or more of:

modifying the switching operation of the first plurality of transistors so that a waveform of a voltage applied to the first winding (135-i) of the transformer (135) changes from a square wave to a quasi-square wave;
modifying the switching operation of the first plurality of transistors so that a duty cycle of the waveform of the voltage applied to the first winding of the transformer changes;
alternately switching the second plurality of transistors between a fault feeding configuration and a crowbar configuration, wherein, in the fault feeding configuration, current is supplied to the DC electrical network through the AC:DC converter circuit (120) and, in the crowbar configuration, current is not supplied to the DC electrical network and is contained within the AC:DC converter circuit.

14. The method (200) of claim 12 or claim 13, comprising supplying a controlled amount of current from the DC power source to the DC electrical network charges one or more capacitors of the DC electrical network.

15. The method (200) of any one of claims 12 to 14, further comprising:
while supplying the controlled amount of current from the DC power source to the DC electrical network via the DC: DC power electronics converter (100, 100a, 100b), isolating the fault in the DC electrical network by operating one or more protection devices.

FIG. 1A

100

110  111-H  112-H  120  121-H  122-H

135-i  135-ii

DC+  DC+

135

111  112  121  122

DC-  DC-

111-L  112-L  121-L  122-L

FIG. 1B

V1  V2

i

VL

150

V1

V2

VL

AC Link
Current

DC Network
Current

FIG. 1C

FIG. 2

FIG. 3

Quasi-Square Wave Operation

Square Wave Operation 50:50

110

135    135-ii

135-i

120

V

Fault

Pulse Width 1

Pulse Width 2

DC Fault Feeding Current

FIG. 4

EP 4 539 320 A1

FIG. 5

FIG. 6

FIG. 8

FIG. 7A

FIG. 7B

FIG. 9A

EP 4 539 320 A1

Resonance Point

IMPEDANCE

LLC

F0                    FREQUENCY

FIG. 9A

IMPEDANCE

DAB

F0                    FREQUENCY

FIG. 9B

FIG. 9C

10

50

HP

LP

GEN
13

GEN
14

ESS
15

16 AC
DC

AC
DC
17

DC
DC
100a

11

Engine Loads

DC
DC
100b

Engine Loads

12

Platform
Loads

Platform
Loads

150

FIG. 10A

FIG. 10B

FIG. 10C

FIG. 11A

FIG. 11B

200

FIG. 12

Europäisches
Patentamt

European
Patent Office

Office européen
des brevets

# EUROPEAN SEARCH REPORT

Application Number

EP 24 19 9900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN YANGFAN ET AL: "Fault Characteristics and Riding-Through Methods of Dual Active Bridge Converter Under Short-Circuit of the Load", IEEE TRANSACTIONS ON POWER ELECTRONICS, INSTITUTE OF ELECTRICAL AND ELECTRONICS ENGINEERS, USA, vol. 36, no. 8, 25 January 2021 (2021-01-25), pages 9578-9591, XP011853765, ISSN: 0885-8993, DOI: 10.1109/TPEL.2021.3054023 [retrieved on 2021-05-11] * Section V. Methods for Fault Riding-Through Section V. A. Power Switches Blocking Method Section VI. A. F1 Fault Section VI. C. FRT Methods Verification; figures 1-4, 8, 12, 13, 18 * | 1-15 | INV. H02M1/32 H02M1/36 H02M3/00 H02M3/335 |
| X | CHAORAN ZHUO ET AL: "Research on fault current limitation and active control for power electronic transformer in direct current grid", IET GENERATION, TRANSMISSION&DISTRIBUTION, IET, UK, vol. 15, no. 1, 26 November 2020 (2020-11-26), pages 121-134, XP006105317, ISSN: 1751-8687, DOI: 10.1049/GTD2.12017 | 1,11,12 | |
| A | * page 126, right-hand column, paragraph 2; figures 7, 8 * | 2-10, 13-15 | |
| X | US 2023/134788 A1 (TRAINER DAVID R [GB] ET AL) 4 May 2023 (2023-05-04) * the whole document * | 1,3,11, 12 | |

TECHNICAL FIELDS SEARCHED (IPC)

H02M

-/--

The present search report has been drawn up for all claims

| Place of search | Date of completion of the search | Examiner |
|---|---|---|
| The Hague | 27 January 2025 | Van der Meer, Paul |

EPO FORM 1503 03.82 (P04C01)

page 1 of 2

| | Europäisches Patentamt European Patent Office Office européen des brevets | **EUROPEAN SEARCH REPORT** | **Application Number** EP 24 19 9900 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | CN 116 526 816 A (ELECTRIC POWER SCIENCE RES INST OF STATE GRID ANHUI ELECTRIC POWER CO) 1 August 2023 (2023-08-01) * abstract; figures 3, 4 * ----- | 1,11,12 | |

TECHNICAL FIELDS SEARCHED (IPC)

The present search report has been drawn up for all claims

| Place of search | Date of completion of the search | Examiner |
| --- | --- | --- |
| The Hague | 27 January 2025 | Van der Meer, Paul |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 19 9900

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2025

| Patent document cited in search report | Publication date | Patent family member(s) | | Publication date |
|---|---|---|---|---|
| US 2023134788 A1 | 04-05-2023 | EP | 4175148 A1 | 03-05-2023 |
| | | US | 2023134788 A1 | 04-05-2023 |
| CN 116526816 A | 01-08-2023 | NONE | | |

EPO FORM P0459

For more details about this annex : see Official Journal of the European Patent Office, No. 12/82